# EUROPÄISCHE PATENTSCHRIFT

(11) **EP 0 601 285 B1**
(45) Veröffentlichungstag und Bekanntmachung des Hinweises auf die Patenterteilung: **26.06.1996**
(21) Anmeldenummer: 93113951.3
(22) Anmeldetag: 01.09.1993
(51) Int. Cl.: F02M 35/10, F16J 15/10

(54) **Dichtung zur gasdichten Befestigung eines Ansaugkrümmers am Zylinderkopf einer Verbrennungskraftmaschine**
Sealing for gastight fixing of a suction manifold on the cylinder head of a combustion engine
Joint pour la fixation étanche au gaz d'un collecteur d'admission à la culasse d'un moteur à combustion interne

(30) Priorität: 11.12.1992 DE 4241759
(43) Veröffentlichungstag der Anmeldung: 15.06.1994
(73) Patentinhaber: Firma Carl Freudenberg, D-69469 Weinheim (DE)
(72) Erfinder: Döhring, Klaus, D-81475 München (DE); Brümmer, Michael, D-69514 Laudenbach (DE)

(56) Entgegenhaltungen:
- EP-A- 0 059 777
- US-A- 4 428 331

## Beschreibung

Die Erfindung betrifft eine Dichtung aus elastomerem Werkstoff zur gasdichten Befestigung eines Ansaugkrümmers am Zylinderkopf einer Verbrennungskraftmaschine, wobei die Dichtung auf der dem Zylinderkopf zugewandten Seite des Ansaugkrümmerflanschs festlegbar ist, umfassend zumindest zwei Dichtflächen, die zumindest zwei Ansaugrohre des Ansaugkrümmers während der bestimmungsgemäßen Verwendung umfangsseitig dichtend umschließen und einstückig ineinanderübergehend ausgebildet sind und wobei die Dichtflächen durch Stege miteinander verbunden sind.

Eine solche Dichtung ist aus der US-A-4,428,331 bekannt. Die Dichtung ist als Flachdichtung ausgebildet und dichtet die Trennfuge zwischen einem Ansaugkrümmer und einem Zylinderkopf gasdicht ab. Dabei ist allerdings zu beachten, daß die Dichtung aus elastomerem Werkstoff Fertigungstoleranzen und herstellungsbedingtem Schwund unterliegt. Außerdem kann eine Dehnung der Dichtung durch Wasseraufnahme erfolgen. Dieses Verhalten bedingt eine aufwendige Montage, um zu guten Abdichtungsergebnissen während einer langen Gebrauchsdauer zu gelangen. In montagetechnischer und wirtschaftlicher Hinsicht ist dies wenig befriedigend. Verstärkt werden diese Nachteile, wenn Ansaugkrümmer aus polymerem Werkstoff zur Anwendung gelangen. Da es sich sowohl bei der Dichtung als auch bei dem Ansaugkrümmer um Kunststoffteile handelt, ergänzen sich Fertigungstoleranzen und Schwund häufig derart, daß eine exakte Festlegung der Dichtung zwischen dem Ansaugkrümmer und dem Zylinderkopf, der aus einem metallischen Werkstoff besteht, nicht mehr gegeben ist.

Der Erfindung liegt die Aufgabe zugrunde, eine Dichtung der vorbekannten Art derart weiterzuentwickeln, daß trotz herstellungsbedingter Toleranzen und dem im Anschluß an die Herstellung auftretenden Schwund, insbesondere bei Verwendung von Ansaugkrümmern aus polymerem Werkstoff, eine gasdichte Befestigung des Ansaugkrümmers am Zylinderkopf während der gesamten Gebrauchsdauer der Verbrennungskraftmaschine gewährleistet ist.

Diese Aufgabe wird durch die kennzeichnenden Merkmale von Anspruch 1 gelöst. Auf vorteilhafte Ausgestaltungen nehmen die Unteransprüche Bezug.

Zur Lösung der Aufgabe ist es vorgesehen, daß zumindest einer der Stege in zumindest einem Teilbereich seiner Erstreckung als Längen-Toleranzausgleich zusammenfaltbar gestaltet ist. Hierbei ist von hervorzuhebender Bedeutung, daß herstellungsbedingte Fertigungstoleranzen und werkstoffbedingter Schwund durch die Integration des axial-biegeweichen und zusammenfaltbaren Längen-Toleranzausgleichs in die Dichtung problemlos kompensiert werden können. Um eine einwandfreie Abdichtung im Bereich zwischen dem Ansaugkrümmer-Flansch und dem Zylinderkopf zu gewährleisten, ist der Längen-Toleranzausgleich außerhalb der Abdichtungszonen in den Stegen angeordnet, die die Dichtflächen miteinander verbinden, so daß eine einstückig ausgebildete Dichtung entsteht.

Durch die einstückige Ausgestaltung der Dichtung ist diese in fertigungstechnischer Hinsicht einfach herstellbar und kann während der Montage problemlos gehandhabt werden und exakt an der dafür vorgesehenen Stelle eingebaut werden.

Nach einer vorteilhaften Ausgestaltung ist es vorgesehen, daß der Längen-Toleranzausgleich wellenförmig ausgebildet ist. Da es sich bei den auszugleichenden Toleranzen um solche im Bereich von + 0,75 bis - 0,25 Millimeter handelt, sind zum Ausgleich zumeist drei Einfaltungen ausreichend.

Die Dichtung gelangt bevorzugt dann zur Anwendung, wenn das Ansaugrohr und der Zylinderkopf zumindest zwei Ansaugöffnungen aufweist. Bei einer Reihen-Vierzylindermaschine oder einem V-8-Motor kann die Dichtung dadurch gekennzeichnet sein, daß sie vier in Reihe angeordnete Dichtflächen aufweist, wobei die beiden inneren Dichtflächen durch zumindest einen Mittelsteg verbunden sind und der Längen-Toleranzausgleich jeweils in den Stegen zwischen den äußeren und den benachbarten inneren Dichtflächen angeordnet ist. Hierbei ist von Vorteil, daß die beiden Dichtflächen, die beiden inneren Ansaugrohr abdichten, toleranzmäßig von den äußeren Dichtflächen abgekoppelt sind. Die vergleichsweise geringe Länge der beiden mittleren Dichtflächen, die durch den Mittelsteg miteinander verbunden sind, kann problemlos unter Vermeidung unerwünscht großer Toleranzen hergestellt werden. Bei einer einstückigen Ausgestaltung der beiden inneren Dichtflächen mit den beiden äußeren Dichtflächen ohne Toleranzausgleich wäre dies allerdings nur noch mit einem sehr hohen Fertigungsaufwand möglich, der in wirtschaftlicher Hinsicht wenig befriedigend ist.

Eine Dichtung mit vorteilhaftem Längen-Toleranzausgleich kann, wie zuvor beschrieben, bei einer Reihen-Vierzylindermaschine zur Anwendung gelangen, ist aber auch dann vorteilhaft, wenn Verbrennungskraftmaschinen drei und mehr Zylinder aufweisen.

Generell besteht die Möglichkeit, daß die Dichtung materialeinheitlich nur aus elastomerem Werkstoff besteht. Um die Gebrauchseigenschaften und die Formstabilität zu verbessern, kann es vorgesehen sein, daß zumindest die Dichtflächen und der Mittelsteg mit einem Dichtungsträger aus polymerem Werkstoff adhäsiv und/oder formschlüssig verbunden sind. Durch diese Ausgestaltung ist die Dichtung in den Teilbereichen, die zur Abdichtung zwischen dem Ansaugkrümmer und dem Zylinderkopf vorgesehen sind, weitgehend formstabil und dadurch im Hinblick auf eine einfache Montage gut handhabbar.

Bei Verwendung eines Dichtungsträgers kann dieser im Bereich der Stege mit dem Längen-Toleranzausgleich versehen sein. Durch die im Vergleich zum elastomeren Werkstoff der Dichtung höhere Eigensteifigkeit des polymeren Werkstoffs ist eine formstabile Zuordnung des Längen-Toleranzausgleichs zu der Dichtung gewährleistet, ohne daß die vorteilhaften Gebrauchseigenschaften verloren gehen.

Gemäß einer vorteilhaften Ausgestaltung kann der Dichtungsträger auf der dem Ansaugkümmer und dem Zylinderkopf zugewandten Seite mit Dichtflächen versehen sein und in Richtung des Ansaugkrümmers und des Zylinderkopfs jeweils ein U-förmig geöffnetes Profil aufweisen, das den elastomeren Werkstoff zumindest teilweise umgreift. Ein derartig ausgebildetes Profil sorgt für eine hohe Formstabilität der Dichtung während der Montage, wobei der Dichtungsträger zumindest eine, bevorzugt eine Vielzahl von Durchbrechungen aufweist, die vom elastomeren Werkstoff der Dichtflächen durchdrungen sind. Die mittige Festlegung des Dichtungsträgers zwischen den Dichtflächen, die einerseits in Richtung des Ansaugkrümmers und andererseits in Richtung des Zylinderkopfs weisen, bedingt eine gleichmäßige Anpressung und somit Dichtwirkung einer jeden Dichtfläche.

Die in Richtung von Ansaugkrümmer und Zylinderkopf vorspringenden Schenkel des Dichtungsträgers können als Anschläge ausgebildet sein. Die Anschläge weise jeweils eine geringere Erstreckung auf, als die Dichtflächen in gleicher Richtung. Dadurch wird während der Montage der Dichtung zwischen dem Ansaugkrümmer und dem Zylinderkopf der Anpreßdruck auf den elastomeren Werkstoff auf das für eine Abdichtung optimale Maß begrenzt. Außerdem ist bei einer derartigen Ausgestaltung von Vorteil, daß der elastomere Werkstoff dadurch, daß er in dem U-förmig geöffneten Profil des Dichtungsträgers angeordnet ist, während der gesamten Gebrauchsdauer vor äußeren Einflüssen geschützt ist.

Der Dichtungsträger und/oder der elastische Werkstoff der Dichtung können auf der dem Ansaugkrümmer zugewandten Seite zumindest einen einstückig angeformten Positionierungsvorsprung aufweisen, der mit einer in Richtung des Zylinderkopfs geöffneten Ausnehmung des Flanschs in Eingriff bringbar ist. Bevorzugt sind die Dichtflächen in Umfangsrichtung gleichmäßig verteilt mit Positionierungsvorsprüngen versehen, um in diesem für die Abdichtung besonders wichtigen Bereich eine gute, gasdichte Verbindung von Ansaugkrümmer und Zylinderkopf zu erreichen. Die Positionierungsvorsprünge haben ferner den Vorteil, daß das Ansaugrohr und die Dichtung vor den endgültigen Montage vormontiert werden können. Besonders vorteilhaft ist dieses Verfahren, wenn der Ansaugkrümmer aus einem polymeren Werkstoff besteht, da die zur Aufnahme der Positionierungsvorsprünge notwendigen Ausnehmungen herstellungsbedingt direkt eingeformt werden können. Die Ausnehmungen weisen bevorzugt einen kleineren Öffnungsquerschnitt auf, als die Positionierungsvorsprünge. Durch diese Ausgestaltung können die Dichtung und der Ansaugflansch miteinander verpreßt werden. Die Montage des vormontierten Teils am Zylinderkopf der Verbrennungskraftmaschine ist dadurch weiter vereinfacht. Sind die Positionierungsvorsprünge einstückig mit dem Dichtungsträger verbunden, durchdringen diese den elastomeren Werkstoff in Richtung des Ansaugkrümmers. Im Rahmen der vorliegenden Erfindung gelangen jedoch bevorzugt Positionierungsvorsprünge zur Anwendung, die aus dem elastomeren Werkstoff der Dichtung bestehen. Durch die Nachgiebigkeit der Positionierungsvorsprünge kann die Dichtung insgesamt problemlos am Flansch des Ansaugkrümmers festgelegt werden.

Gemäß einer vorteilhaften Weiterbildung kann es vorgesehen sein, daß der Mittelsteg als Dichtbrücke ausgebildet ist, daß der Dichtungsträger und die Dichtbrücke mit zumindest einer gemeinsamen Durchbrechung versehen sind, daß die Durchbrechung als Anschluß ausgebildet ist und daß das eine Ende des Anschlusses mit der Kurbelgehäuseentlüftung der Verbrennungskraftmaschine und das andere Ende des Anschlusses mit zumindest einer Ansaugöffnung der Verbrennungskraftmaschine verbunden ist. Hierbei ist von Vorteil, daß der Anschluß direkt in die Dichtung integriert ist und das Kurbelgehäusegas unmittelbar dem Zylinderkopf benachbart in die Ansaugrohre eingespeist wird. Durch diese Ausgestaltung und den wärmeabstrahlenden Zylinderkopf ist eine vereisungsungssichere Zuführung des Kurbelgehäusegases in die Ansaugrohre gewährleistet. Überdruck im Kurbelgehäuse mit den daraus resultierenden Folgeschäden wird sicher vermieden.

Zumindest die Dichtflächen und die Dichtbrücke werden jeweils durch zwei umlaufende, mit Abstand zueinander benachbarte Dichtlippen begrenzt, die in Richtung der abzudichtenden Fläche vorstehen. Die Positionierungsvorsprünge sind bevorzugt im Bereich zwischen den einander umschließenden Dichtlippen angeordnet.

Zwei Ausführungsbeispiele der erfindungsgemäßen Dichtung sind nachfolgend anhand der als Anlage beigefügten Zeichnungen näher erläutert. Diese zeigen die zu berücksichtigenden Einzelkomponenten teilweise in schematischer Darstellung.

In Fig. 1 ist eine Dichtung gezeigt, die vollständig aus elastomerem Werkstoff besteht und mit einem Längen-Toleranzausgleich versehen ist.

In den Fig. 2 bis 4 ist ein weiteres Ausführungsbeispiel einer erfindungsgemäßen Dichtung gezeigt, wobei in Fig. 2 der Dichtungsträger aus polymerem Werkstoff gezeigt ist, der einen Längen-Toleranzausgleich umfaßt; in Fig. 3 ist eine der Dichtungen gezeigt, die jeweils in Richtung des hier nicht dargestellten Zylinderkopfs und des Ansaugkrümmers gemäß Fig. 5 angeordnet sind. Ein Längenausgleich ist nur durch die Nachgiebigkeit des elastomeren Werkstoffs bedingt.

In Fig. 4 ist die Dichtung, bestehend aus dem Dichtungsträger und dem elastomeren Werkstoff gemäß der Fig. 2 und 3 im miteinander verbundenen Zustand gezeigt.

In Fig. 5 ist ein Ausführungsbeispiel eines Ansaugkrümmers aus polymerem Werkstoff gezeigt, bei dem die erfindungsgemäße Dichtung zur Anwendung gelangen kann.

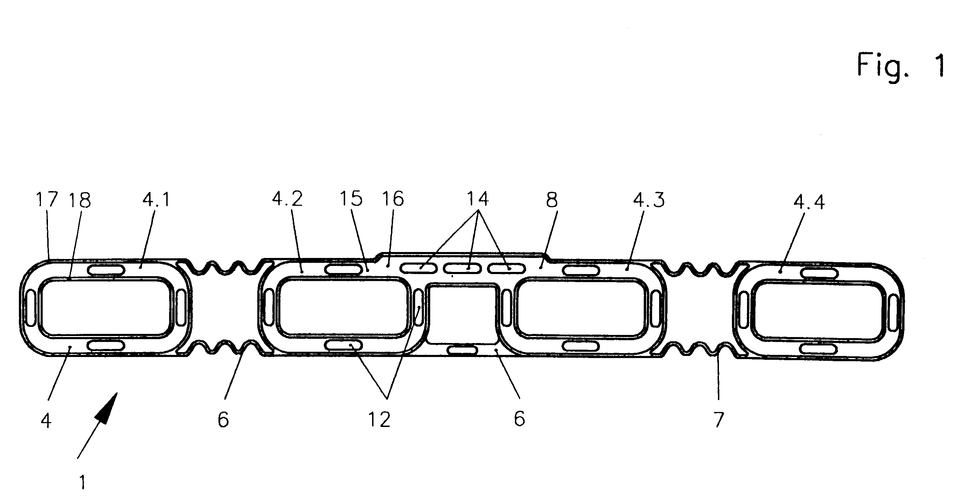

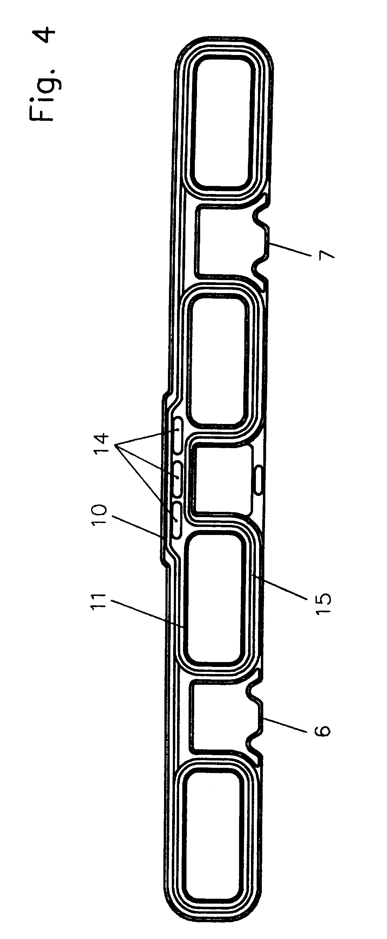

In den beiden Ausführungsbeispielen gemäß der Fig. 1 und 4 ist jeweils eine Dichtung 1 aus elastomerem Werkstoff gezeigt, die die Trennfuge zwischen dem Zylinderkopf einer Verbrennungskraftmaschine und einem Ansaugkrümmer 2 aus polymerem Werkstoff abdichtet. Die Dichtflächen 4 erstrecken sich in beiden Ausführungsbeispielen jeweils zwischen zwei Dichtlippen 17, 18, die einander mit Abstand benachbart zugeordnet sind und die Ansaugrohre 5 des Ansaugkrümmers 2 umschließen. Im Zwischenraum zwischen den beiden Dichtlippen 17, 18 sind jeweils Positionierungsvorsprünge 12 angeordnet, die einstückig ineinander übergehend aus elastomerem Werkstoff bestehen.

In Fig. 1 ist eine Dichtung 1 gezeigt, die vollständig aus elastomerem Werkstoff besteht, wobei die Dichtung 1 vier in Reihe angeordnete Ansaugrohre 5.1, 5.2, 5.3, 5.4 gegenüber dem Zylinderkopf andichtet. Die beiden inneren Dichtflächen 4.2, 4.3 sind durch Stege 6 formstabil miteinander verbunden, während die beiden äußeren Dichtflächen 4.1, 4.4 jeweils über einen Längen-Toleranzausgleich 7 an der benachbarten, inneren Dichtfläche 4.2, 4.3 festgelegt sind. Bei der hier dargestellten Ausführung erweist es sich zumeist als vorteilhaft, wenn der Längen-Toleranzausgleich 7 eine Armierung umfaßt, so daß die Dichtung 1 weitgehend formstabil ausgeführt ist und dadurch besser montiert werden kann. Als Armierung kann beispielsweise ein glasfaserverstärkter Kunststoff zur Anwendung gelangen. Im Bereich des Längen-Toleranzausgleichs 7 ist eine Abdichtung nicht erforderlich. Der Mittelsteg 8, der als Dichtbrücke 16 ausgebildet ist, weist in diesem Ausführungsbeispiel drei Durchbrechungen 14 auf, die als Anschluß ausgebildet sind. Das eine Ende des Anschlusses ist mit der Kurbelgehäuseentlüftung einer hier nicht dargestellten Verbrennungskraftmaschine verbunden, während das andere Ende des Anschlusses mit zumindest einer Ansaugöffnung der Verbrennungskraftmaschine verbunden ist. Durch die Anordnung der Dichtung 1 nahe des Zylinderkopfs und eine entsprechende Ausgestaltung des Ansaugkrümmers 2 kann das Kurbelgehäusegas bedarfsweise durch die vorgewärmten Leitungen geführt werden, so daß eine Vereisungsgefahr und eine Beschädigung des Kurbelgehäuses durch Überdruck nicht besteht. Die Positionierungsvorsprünge 12 sind in diesem Ausführungsbeispiel oval ausgebildet und können mit Ausnehmungen 13 des Ansaugflansches 3 in Eingriff gebracht werden.

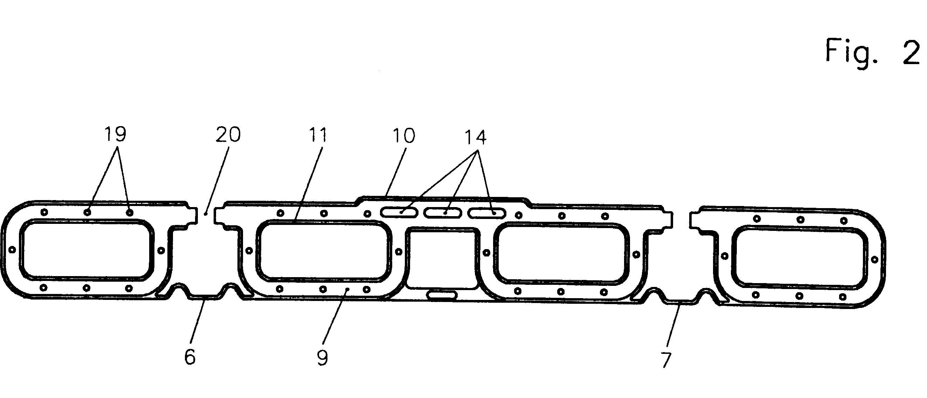

In Fig. 2 ist ein Dichtungsträger 9 gezeigt, der im Bereich der Stege 6, die die Dichtflächen 4 miteinander verbinden, als Längen-Toleranzausgleich 7 ausgebildet ist. Der Dichtungsträger 9 weist jeweils in Richtung der beiden angrenzenden Bauteile ein U-förmig offenes Profil auf, so daß der elastomere Werkstoff 15 in der wannenförmigen Vertiefung festlegbar ist. Der elastomere Werkstoff 15 durchdringt die Öffnungen 19 im Dichtungsträger 9 formschlüssig.

Auf der dem Längen-Toleranzausgleich 7 gegenüberliegenden Seite ist der Dichtungsträger 9 mit einer Durchbrechung 20 versehen, die während der bestimmungsgemäßen Verwendung von elastomerem Werkstoff 15 überbrückt ist.

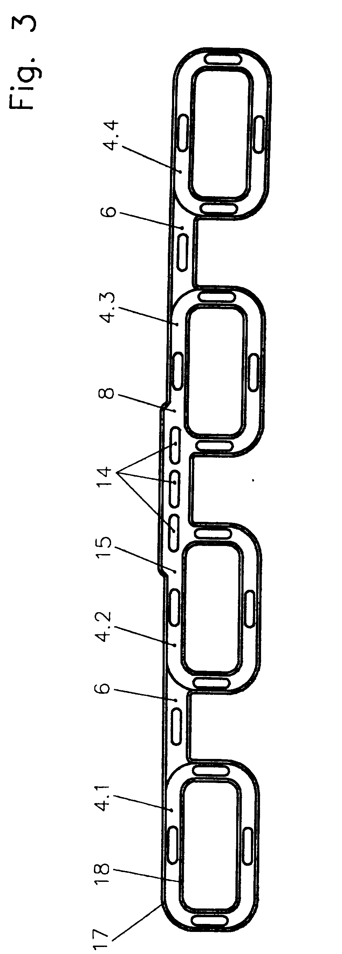

In Fig. 3 ist das Dichtteil aus elastomerem Werkstoff 15 gemäß Fig. 4 gezeigt, wobei die Dichtflächen 4.1, 4.2, 4.3, 4.4, die die Ansaugrohre 5.1, 5.2, 5.3, 5.4 im Bereich des Flanschs 3 umschließen, jeweils mit elastisch nachgiebigen Stegen 6 einstückig ineinander übergehend verbunden sind. Die Stege 6 überbrücken Durchbrechungen 20 des Dichtungsträgers 9 gemäß Fig. 2.

In Fig. 4 ist die fertigmontierte Dichtung 1 gezeigt, wobei sich der Längenausgleich einerseits durch den wellenförmigen Toleranzausgleich 7 des Dichtungsträgers 9 ergibt und andererseits im gegenüberliegenden Teilbereich durch eine Aussparung des Dichtungsträgers 9, die vom elastomeren Werkstoff 15 der Dichtung 1 durchdrungen ist. Eine derart ausgestaltete Dichtung weist eine gute Formbeständigkeit auf und ist gut handhabbar.

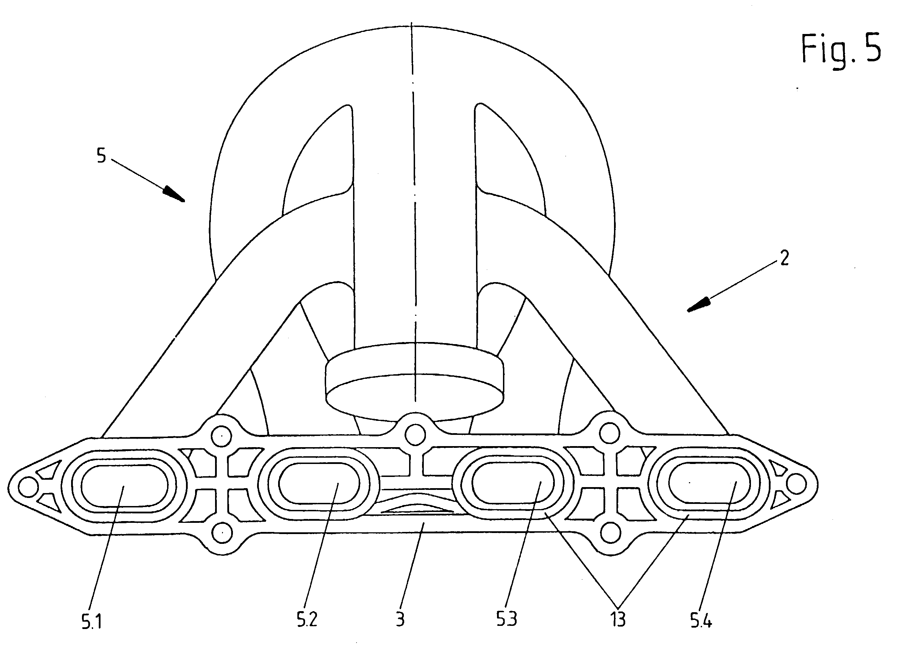

In Fig. 5 ist ein Beispiel eines Ansaugkrümmers 2 gezeigt, der mit einem Flansch 3 versehen ist. Die Ansaugrohre 5.1, 5.2, 5.3, 5.4 sind auf der dem zylinderkopf zugewandten Seite des Flanschs 3 jeweils mit einer umlaufenden Asnehmung 13 versehen, in die die Positionierungsvorsprünge 12 der Dichtung 1 einschnappbar sind. Die derart vormontierte Einheit wird dann mit dem Zylinderkopf verschraubt.

## Patentansprüche

1. Dichtung (1) aus elastomerem Werkstoff (15) zur gasdichten Befestigung eines Ansaugkrümmers (2) am Zylinderkopf einer Verbrennungskraftmaschine, wobei die Dichtung (1) auf der dem Zylinderkopf zugewandten Seite des Ansaugkrümmerflanschs (3) festlegbar ist, umfassend zumindest zwei Dichtflächen (4.1, 4.2, ...), die zumindest zwei Ansaugrohre (5.1, 5.2, ...) des Ansaugkrümmers (2) während der bestimmungsgemäßen Verwendung umfangsseitig dichtend umschließen und einstückig ineinander übergehend ausgebildet sind und wobei die Dichtflächen (4.1, 4.2, ...) durch Stege (6) miteinander verbunden sind, dadurch gekennzeichnet, daß zumindest einer der Stege (6) in zumindest einem Teilbereich seiner Erstreckung als Längen-Toleranzausgleich (7) zusammenfaltbar gestaltet ist.

2. Dichtung nach Anspruch 1, dadurch gekennzeichnet, daß der Längen-Toleranzausgleich (7) wellenförmig ausgebildet ist.

3. Dichtung nach Anspruch 1 bis 2, gekennzeichnet durch vier in Reihe angeordnete Dichtflächen (4.1, 4.2, 4.3, 4.4), wobei die beiden inneren Dichtflächen (4.2, 4.3) durch zumindest einen Mittelsteg (8) verbunden sind und der Längen-Toleranzausgleich (7) jeweils in den Stegen (6) zwischen den äußeren und den benachbarten inneren Dichtflächen (4.1, 4.2; 4.3, 4.4) angeordnet ist.

4. Dichtung nach Anspruch 3, dadurch gekennzeichnet, daß zumindest die Dichtflächen (4) und der Mittelsteg (8) mit einem Dichtungsträger (9) aus polymerem Werkstoff adhäsiv verbunden sind.

5. Dichtung nach Anspruch 3, dadurch gekennzeichnet, daß zumindest die Dichtflächen (4) und der Mittelsteg (8) mit einem Dichtungsträger (9) aus polymerem Werkstoff formschlüssig verbunden sind.

6. Dichtung nach Anspruch 4 bis 5, dadurch gekennzeichnet, daß der Dichtungsträger (9) im Bereich der Stege (6) mit dem Längen-Toleranzausgleich (7) versehen ist.

7. Dichtung nach Anspruch 4 bis 6, dadurch gekennzeichnet, daß der Dichtungsträger (9) auf der dem Ansaugkrümmer (2) und der dem Zylinderkopf zugewandten Seite mit Dichtflächen (4) versehen ist und in Richtung des Ansaugkrümmers (2) und des Zylinderkopfs jeweils ein U-förmig geöffnetes Profil aufweist, das den elastomeren Werkstoff (15) zumindest teilweise umgreift.

8. Dichtung nach Anspruch 4 bis 7, dadurch gekennzeichnet, daß die in Richtung von Ansaugkrümmer (2) und Zylinderkopf vorspringenden Schenkel (10, 11) des Dichtungsträgers (9) als Anschläge ausgebildet sind.

9. Dichtung nach Anspruch 4 bis 8, dadurch gekennzeichnet, daß der Dichtungsträger (9) und/oder der elastomere Werkstoff (15) der Dichtung (1) auf der dem Ansaugkrümmer (2) zugewandten Seite zumindest einen einstückig angeformten Positionierungsvorsprung (12) aufweist, der mit einer in Richtung des Zylinderkopfs geöffneten Ausnehmung (13) des Flanschs (3) in Eingriff bringbar ist.

10. Dichtung nach Anspruch 9, dadurch gekennzeichnet, daß die Dichtflächen (4) in Umfangsrichtung gleichmäßig verteilt mit Positionierungsvorsprüngen versehen sind.

11. Dichtung nach Anspruch 4 bis 10, dadurch gekennzeichnet, daß der Mittelsteg (8) als Dichtbrücke (16) ausgebildet ist, daß der Dichtungsträger (9) und die Dichtbrücke (16) mit zumindest einer gemeinsamen Durchbrechung (14) versehen sind, daß die Durchbrechung (14) als Anschluß ausgebildet ist und daß das eine Ende des Anschlusses mit der Kurbelgehäuseentlüftung der Verbrennungskraftmaschine und das andere Ende des Anschlusses mit zumindest einer Ansaugöffnung der Verbrennungskraftmaschine verbunden ist.

## Claims

1. A gasket (1) made of elastomeric material (15) for the gastight attachment of an intake manifold (2) to the cylinder head of an internal combustion engine, the gasket (1) being fixable on that side of the intake-manifold flange (3) which faces the cylinder head, comprising at least two sealing surfaces (4.1, 4.2, ...), which surround at least two intake pipes (5.1, 5.2, ...) of the intake manifold (2) during use as intended, sealing them at the periphery, and are designed to merge integrally into one another, and the sealing surfaces (4.1, 4.2, ...) being connected to one another by webs (6), characterized in that at least one of the webs (6) is designed in such a way that it can be folded up over at least part of its length, forming a length tolerance compensator (7).

2. A gasket according to claim 1, characterized in that the length tolerance compensator (7) is of undulating design.

3. A gasket according to either of claims 1 and 2, characterized by four sealing surfaces (4.1, 4.2, 4.3, 4.4) arranged in a row, the two inner sealing surfaces (4.2, 4.3) being connected by at least one central web (8), and the length tolerance compensator (7) in each case being arranged in the webs (6) between the outer and the adjacent inner sealing surfaces (4.1, 4.2; 4.3, 4.4).

4. A gasket according to claim 3, characterized in that at least the sealing surfaces (4) and the central web (8) are adhesively bonded to a gasket carrier (9) made of polymeric material.

5. A gasket according to claim 3, characterized in that at least the sealing surfaces (4) and the central web (8) are positively connected to a gasket carrier (9) made of polymeric material.

6. A gasket according to either of claims 4 and 5, characterized in that the gasket carrier (9) is provided with the length tolerance compensator (7) in the region of the webs (6).

7. A gasket according to any of claims 4 to 6, characterized in that the gasket carrier (9) is provided with sealing surfaces (4) on the side facing the intake manifold (2) and the side facing the cylinder head and, in the direction of the intake manifold (2) and of the cylinder head, has a profile in the form of an open-ended U which at least partially surrounds the elastomeric material (15).

8. A gasket according to any of claims 4 to 7, characterized in that the limbs (10, 11) of the gasket carrier (9) which project in the direction of the intake manifold (2) and of the cylinder head are designed as stops.

9. A gasket according to any of claims 4 to 8, characterized in that, on the side facing the intake manifold (2), the gasket carrier (9) and/or the elastomeric material (15) of the gasket (1), has at least one integrally moulded positioning projection (12) which can be brought into engagement with a recess (13) in the flange (3), the said recess being open in the direction of the cylinder head.

10. A gasket according to claim 9, characterized in that the sealing surfaces (4) are provided with positioning projections distributed in a uniform manner in the circumferential direction.

11. A gasket according to any of claims 4 to 10, characterized in that the central web (8) is designed as a sealing bridge (16), in that the gasket carrier (9) and the sealing bridge (16) are provided with at least one common aperture (14), in that the aperture (14) is designed as a connection, and in that one end of the connection is connected to the crankcase vent of the internal combustion engine and the other end of the connection is connected to at least one intake port of the internal combustion engine.

## Revendications

1. Joint (1) en matière élastomère (15) pour la fixation étanche au gaz d'un collecteur d'admission (2) sur la culasse d'un moteur à combustion interne, le joint (1) pouvant être fixé sur la face de la bride (3) du collecteur d'admission située du côté de la culasse, comprenant au moins deux surfaces d'étanchéité (4.1, 4.2, ...) qui entourent, pendant l'utilisation conforme aux prescriptions, au moins deux tubulures d'admission (5.1, 5.2, ...) du collecteur d'admission (2) de manière étanche sur leur circonférence, et sont exécutées de manière à se confondre, et les surfaces d'étanchéité (4.1, 4.2, ...) étant reliées les unes aux autres par des éléments intermédiaires (6), caractérisé en ce qu'au moins un des éléments intermédiaires (6) a, dans au moins une partie de son étendue, la forme d'une compensation des tolérances en longueur (7) pouvant être pliée.

2. Joint selon la revendication 1, caractérisé en ce que la compensation des tolérances en longueur (7) est exécutée de manière ondulée.

3. Joint selon les revendications 1 à 2, caractérisé par quatre surfaces d'étanchéité (4.1, 4.2, 4.3, 4.4) situées en série, les deux surfaces d'étanchéité internes (4.2, 4.3) étant reliées par au moins un élément intermédiaire central (8), et la compensation des tolérances en longueur (7) étant située, respectivement, dans les éléments intermédiaires (6) entre les surfaces d'étanchéité externes et les surfaces d'étanchéité internes contiguës (4.1, 4.2; 4.3, 4.4).

4. Joint selon la revendication 3, caractérisé en ce qu'au moins les surfaces d'étanchéité (4) et l'élément intermédiaire central (8) sont reliés de manière adhésive à un support de joint (9) fait d'une matière polymère.

5. Joint selon la revendication 3, caractérisé en ce qu'au moins les surfaces d'étanchéité (4) et l'élément intermédiaire central (8) sont reliés à un support de joint (9) en matière polymère par conjugaison de forme.

6. Joint selon les revendications 4 à 5, caractérisé en ce que le support de joint (9) est pourvu, dans la zone des éléments intermédiaires (6), de la compensation des tolérances en longueur (7).

7. Joint selon les revendications 4 à 6, caractérisé en ce que le support de joint (9) est pourvu, sur le côté tourné vers le collecteur d'admission (2) et vers la culasse, de surfaces d'étanchéité (4), et présente, en direction du collecteur d'admission (2) et de la culasse respectivement, un profil ouvert en forme de U qui entoure, au moins partiellement, la matière élastomère (15).

8. Joint selon les revendications 4 à 7, caractérisé en ce que les branches (10, 11) du support de joint (9) saillantes en direction du collecteur d'admission (2) et de la culasse sont exécutées en tant que butées.

9. Joint selon les revendications 4 à 8, caractérisé en ce que le support du joint (9) et/ou la matière élastomère (15) du joint est/sont pourvu(e)/s, sur le côté tourné vers le collecteur d'admission (2), d'au moins une saillie de positionnement (12) solidaire avec lui ou elle/eux, et qui peut être enclenchée avec un évidement (13) de la bride (3) ouvert en direction de la culasse.

10. Joint selon la revendication 9, caractérisé en ce que les surfaces d'étanchéité (4) sont pourvues de saillies de positionnement réparties de manière uniforme dans la direction circonférentielle.

11. Joint selon les revendications 4 à 10, caractérisé en ce que l'élément intermédiaire central (8) est exécuté en tant que pont d'étanchéité (16), en ce que le support de joint (9) et le pont d'étanchéité (16) sont pourvus d'au moins une découpure (14) commune, en ce que la découpure (14) est exécutée en tant que raccord, et en ce que l'une des extrémités du raccord est reliée au reniflard d'aération du carter du moteur à combustion interne et l'autre extrémité du raccord est reliée à au moins un orifice d'aspiration du moteur à combustion interne.
